Europäisches Patentamt

European Patent Office

Office européen des brevets

(11) Numéro de publication : **0 471 631 A1**

# (12) DEMANDE DE BREVET EUROPEEN

(21) Numéro de dépôt : **91420301.3**

(22) Date de dépôt : **16.08.91**

(51) Int. Cl.⁵ : **G01K 11/06**

(30) Priorité : **16.08.90 FR 9010387**

(43) Date de publication de la demande :
**19.02.92 Bulletin 92/08**

(84) Etats contractants désignés :
**CH DE ES FR GB IT LI**

(71) Demandeur : **JANIN, Paul**
**19, rue Dufour**
**F-69230 Saint-Genis-Laval (FR)**

(71) Demandeur : **Touzé, Michel**
**13, rue Lamarck**
**F-75018 Paris (FR)**

(72) Inventeur : **Touzé, Michel**
**13 Rue Lamarck**
**F-75018 Paris (FR)**

(54) **Système irréversible et inviolable permettant de savoir si un produit surgelé a subi une interruption de la chaine du froid.**

(57)　Il est constitué de deux tubes fermés à une extrémité (1) et (2) dont l'un de plus petit diamêtre (1) pénétre dans l'autre (2).

Un ressort (6) comprimé par le déplacement du tube (1) lors de son introduction dans le tube (2) exerce une pression sur les parois (7) et (8), un systéme de verrouillage (3) et (4) maintient le systéme fermé.

De l'eau colorée (5) remplit le tube formé par les deux tubes imbriqués.

La dilatation de ce liquide (5) au moment de sa congélation exerce une forcé sur les parois (7) et (8) qui en faisant coulisser le tube (1) déverrouille (3) et (4).

Suite à une élévation de température le glaçon fondra et le ressort étant libéré, la force qu'il exerce sur (7) et (8) séparera les deux tubes (1) et (2) et le liquide (5) se répandra en colorant le témoin.

FIG 1

EP 0 471 631 A1

Jouve, 18, rue Saint-Denis, 75001 PARIS

Le système proposé est un témoin permettant de vérifier l'inaltération d'un produit surgelé, en contrôlant si une interruption de la chaîne du froid a eu lieu, à un moment quelconque entre la surgélation du produit en usine et sa distribution.

L'interruption de la chaîne du froid altère sans remède l'intégrité organoleptique et hygiènique d'un produit, même et surtout lorsqu'il est recongelé.

Les produits sont surgelés industriellement en les portant, suivant leur nature, à une température comprise entre -40°c et -110° c.

La conservation de ces produits à une température de -18°c en garantit l'intégrité organoleptique et hygiènique

Cependant dans les lieux de distribution, la manipulation des produits surgelés par les employés ou les clients interrompt parfois la chaîne du froid. Les produits sont même parfois partiellement ou complètement décongelés avant d'être remis dans les bacs de conservation à -18°c.

Les produits sont alors devenus impropres à la consommation pour l'altération de leur goût et la prolifération des bactéries qu'ils contiennent.

Le système proposé est composé d'un récipient réalisé par deux parties emboitables, par exemple, de deux tubes fermés à une extrémité en forme de capuchon dont l'un (1) de plus petit diamètre pénètre dans l'autre (2).

Ces deux capuchons sont maintenus l'un dans l'autre par l'accentuation du frottement des deux parties, par exemple par une arête circulaire (3) figurant sur le capuchon (1) qui pénètre dans le sillon circulaire (4) imprimé sur le capuchon (2), ou bien entendu inversement

Un liquide coloré (5) remplit le tube formé par les deux capuchons imbriqués.

Un ressort comprimé (6) placé à l'intérieur du tube appuie sur les faces (7) et (8) des capuchons (1) et (2)

La compression du ressort est réalisée par le déplacement du capuchon (1) lors de son introduction dans le capuchon (2).

Le verrouillage des capuchons (1) et (2) assuré par l'arête (3) et le sillon circulaire (4) doit présenter une force de maintien supérieure à celle exercée par le ressort comprimé sur les parois (7) et (8).

Dans ces conditions malgré la force exercée par le ressort comprimé, sur les faces (7) et (8) le capuchon (1) restera maintenu dans le capuchon (2).

Lorsque le liquide coloré (5) se transformera en glace,sous l'action d'une basse température, la dilatation provoquera une pression sur les parois du tube, la force exercée sur les parois (7) et (8) du tube chassera l'arête circulaire (3) du sillon (4).

Le ressort comprimé enrobé par le bloc de glace n'exercera plus aucune force sur les parois (7) et (8) et malgré le déverrouillage le capuchon (1) restera fiché dans le capuchon (2).

Au début de la congélation,le liquide maintenu par capilarité ou propulsé dans l'interstice (12) se solidifiera avant celui situé à l'intérieur du tube (5).

L'étanchéité du tube sera donc assurée et rien ne sortira du tube pendant la congélation.

Les surfaces en regard de cet interstice (12) seront lisses afin de permettre le coulissement du capuchon (1) dans le capuchon (2).

Les dimensions de l'arête circulaire (3) et du sillon (4) seront telles que le déverrouillage sera réalisé lorsque le capuchon (1) aura coulissé dans le capuchon (2) sous la pression de la dilatation du liquide (5) se. congelant.

Lorsque la glace fondra,le ressort ne sera plus maintenu et la force exercée sur les parois (7) et (8) libérera le capuchon (1) du capuchon (2) et le liquide coloré se répandra.

Afin que le liquide se répande partiellement ou totalement,les dimensions relatives des deux capuchons doivent être telles que la dilatation du liquide soit suffisante pour assurer un déverrouillage complet et la pression du ressort suffisante pour séparer les deux parties du récipient et libérer le liquide.

L'écoulement du liquide ou la séparation des deux capuchons, consécutifs à une remontée en température du produit, peuvent être visualisés pour le consommateur des différentes façons :

a) Le tube est placé à l'intérieur et en contact d'une enveloppe absorbante qui se colorera lorsque le liquide coloré se répandra.

b) Par la coloration d'une surface absorbante par le liquide coloré, qui fera apparaître des sigles, des lettres, ou des signes.

c) Le déplacement des capuchons sous la pression du ressort libéré modifiera l'aspect physique du logo, d'un texte ou d'une étiquette.

Le témoin sera fixé d'une façon inviolable sur les boîtes contenant les produits surgelés ou visibles au travers d'une lucarne lorsqu'il sera placé à l'intérieur de celle-ci.

Il sera placé dans une capsule étanche et transparente lorsqu'il sera en contact avec les produits surgelés emballés en vrac dans des sacs transparents.

Suivant ces différents cas d'utilisation, l'inertie thermique des produits surgelés et leur type d'emballage, le point de congélation du liquide (5) ainsi que son isolation thermique, devront être définis en fonction des contrôles recherchés, et ce, quel que soit le moyen utilisé, permettant la visualisation de l'écoulement du liquide coloré.

Ce système permet de constater l'élévation de température au-delà du point de décongélation prévu.

L'utilisation simultanée de plusieurs systèmes protégés, sauf un, par des isolations thermiques de plus en plus puissantes, permettra une évaluation de la durée d'exposition à une température supérieure à celle choisie.

Prenons l'exemple d'un système isolé par une protection efficace pendant deux heures a une différence de température de 5°c, d'autres protégés respectivement pendant 4 et 6 heures, dans les mêmes conditions. Au contrôle, si les deux premiers systèmes sont colorés, on peut affirmer que l'élévation de température fut soit :

– entre 4 et 6 heures de 5°c
– plus longues et inférieure à 5°c
– plus courtes et supérieure à 5°c.

Pour obtenir une plus grande précision, on combinera des isolations thermiques de différents coefficients précis, à des systèmes décongelants à différentes températures. Pour chaque niveau de décongélation prévu, un des système ne sera pas isolé. Ainsi, il sera possible de déterminer si les seuils significatifs choisis, en température et en durée d'exposition ont été atteints.

Ainsi il sera possible de déterminer s'il y a qualité parfaite, baisse de qualité, ou qualité impropre à l'usage prévu.

Ces procédés, permettant un contrôle par chaque destinataire successif présentent en plus, l'avantage de sensibiliser les responsables à chaque stade, et d'accroître ainsi la sécurité et la qualité.

Dans tous ces cas, le procédé est inviolable et irréversible.

Le liquide utilisé peut-être de l'eau pure colorée dont le point de décongélation est de 0°c, dans les conditions d'environnement normales, ou de l'eau additionnées de chlorure de sodium dont le point de congélation baisse de 1°c par quantité de 16.8 grammes de sel par litre.

Il est ainsi possible d'ajuster le point de décongélation du liquide coloré.

Tout autre liquide non toxique peut être utilisé à condition qu'il présente les mêmes réactions physiques que celles permettant d'obtenir les résultats décrits précédemment.

De par son principe, ce dispositif présente l'avantage de pouvoir être fabriqué à température ambiante, il n'acquiert son irréversibilité que lorsqu'il a été porté à la température de congélation du liquide qu'il contient.

Pour éviter le remplacement d'un système ayant décongelé par un autre sans coloration apparente on adjoindra un procédé de fixation dont la rupture et le remplacement ne peut passer inaperçu, par exemple un rivetage ou un thermocollage. Un numérotage différent codé ou non pour chaque système ou chaque ensemble de système permettra de compléter la protection contre toute falsification.

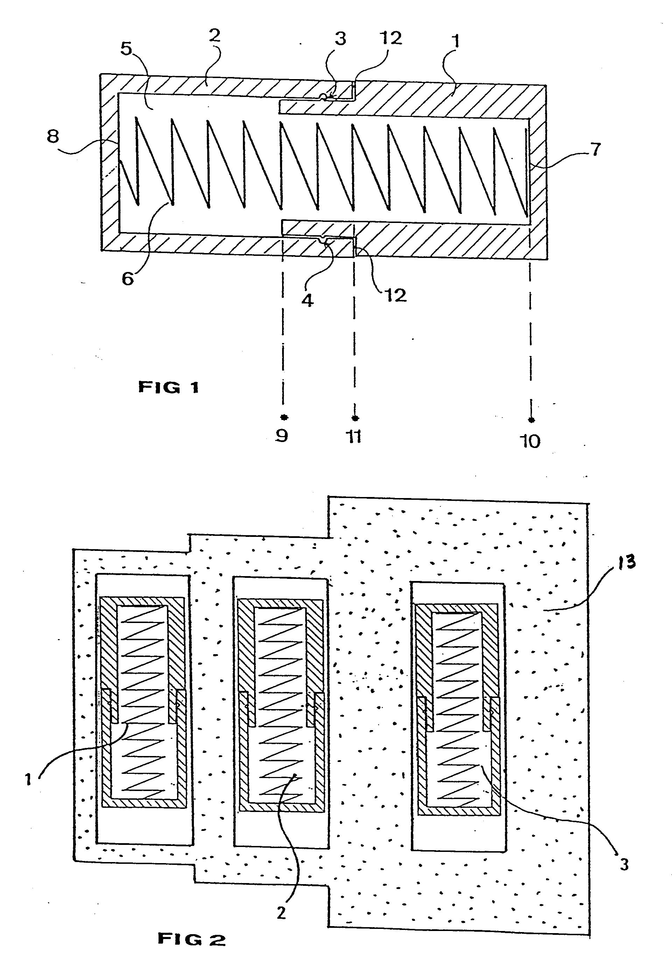

**Revendications**

**1)** Système permettant de savoir si un produit surgelé a subi une interruption de la chaîne du froid, composé d'un récipient réalisé par deux parties emboîtées séparables, par exemple deux petits tubes fermés à une extrémité en forme de capuchon (1) (2) dont l'un de plus petit diamètre (1) pénètre dans l'autre (2) et comprime un ressort, (6) est maintenu par une arête circulaire (3) qui pénètre dans un sillon circulaire (4) de l'autre, remplis de liquide coloré (5), caractérisé par l'ouverture du système de verrouillage provoqué par la dilatation du liquide lors de sa congélation, par la séparation des deux tubes sous la pression du ressort libéré lors de la décongélation et par la libération du liquide coloré.

**2)** Selon la revendication 1 système caractérisé par la coloration d'un témoin par écoulement du liquide coloré.

**3)** Système permettant de déterminer la durée pendant laquelle la température s'élève au-dessus d'un point de congélation déterminé, caractérisé par l'association de plusieurs systèmes tels que précédemment revendiqués et protégés par des isolations thermiques (13) de puissances différentes.

**4)** Systèmes associés suivant la revendication 3, caractérisés par le fait que les températures de décongélations et les isolations sont multiples.

**5)** Système selon les précédentes revendications caractérisés par une fixation au produit ou au lot de produits à controler, inviolable sans que la rupture soit visible.

EP 0 471 631 A1

FIG 1

FIG 2

4

EP 0 471 631 A1

Office européen
des brevets

**RAPPORT DE RECHERCHE EUROPEENNE**

Numero de la demande

EP    91 42 0301

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-2 915 405 (J. H. HAMMOND, JR.) <br> * titre; figures 1,2; colonne 2, lignes 14-66 * <br> --- | 1,5 | G01K11/06 |
| X | DE-A-3 715 289 (G. FRITZ) <br> * Titre; figures 1,2; colonne 2, lignes 24-30 * <br> --- | 1,2,5 | |
| X | FR-A-2 312 019 (COMPTEURS SCHLUMBERGER) <br> * Titre; figures 3,4 * <br> * page 3, ligne 29 - page 4, ligne 3 * <br> --- | 1,5 | |
| A | FR-A-2 613 069 (P. RAME) <br> * Titre; figures 1 - 1c * <br> * page 4, ligne 20 - page 6, ligne 20 * <br> --- | 3 | |
| A | EP-A-0 238 762 (S. CABRERO CABRERA) <br> * Figures 1 - 3; ensemble du brevet * <br> --- | 2,5 | |
| A | FR-A-2 611 899 (E.M. PHELIZON ET AL.) <br> * figures 4, 5; page 9, ligne 29 - page 10, ligne 7 * | 1 | |

|  |
|---|
| **DOMAINES TECHNIQUES RECHERCHES (Int. Cl.5)** <br><br> G01K |

----

Le présent rapport a été établi pour toutes les revendications

| Lieu de la recherche | Date d'achèvement de la recherche | Examinateur |
|---|---|---|
| LA HAYE | 25 NOVEMBRE 1991 | VISSER F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

5